# EUROPEAN PATENT SPECIFICATION

(11) **EP 3 591 218 B1**
(45) Date of publication and mention of the grant of the patent: **22.02.2023**
(21) Application number: 19183771.5
(22) Date of filing: 02.07.2019
(51) Int. Cl.: F03D 1/02, F03D 7/02

(54) **MULTI-ROTOR WIND TURBINE VIBRATION DAMAGE PROTECTION**
SCHWINGUNGSBESCHÄDIGUNGSSCHUTZ FÜR WINDTURBINE MIT MEHREREN ROTOREN
PROTECTION D'ÉOLIENNE À ROTORS MULTIPLES CONTRE LES DOMMAGES DES VIBRATIONS

(30) Priority: 06.07.2018 DK PA201870468
(43) Date of publication of application: 08.01.2020
(73) Proprietor: VESTAS WIND SYSTEMS A/S, 8200 Aarhus N (DK)
(72) Inventor: DALSGAARD, Søren, 8370 Hadsten (DK); NETO, Julio Xavier Vianna, 8200 Aarhus N (DK); YDE, Anders, 8000 Aarhus C (DK)
(74) Representative: Vestas Patents Department

(56) References cited:
- WO-A1-2016/128002
- WO-A1-2016/128004
- WO-A1-2017/084676
- WO-A1-2017/202945

## Description

### FIELD OF THE INVENTION

The invention relates to a method of protecting a multi-rotor wind turbine against vibration induced overload. The invention further relates to a multi-rotor wind turbine taking advantage of that method.

### BACKGROUND OF THE INVENTION

Wind turbines as known in the art comprises a wind turbine tower supporting a nacelle and a rotor with a number of pitch-adjustable rotor blades. Over time, wind turbines have become larger and larger in an attempt to reduce the cost price per Mega Watt Hour (MWh) of produced electrical energy.

As an alternative to larger turbines, the power production per wind turbine tower can also be increased by equipping the wind turbine tower with multiple nacelles having smaller rotor blades. In such a multi-rotor wind turbine the nacelles are generally positioned at the distal ends of one or more support arms extending from a central tower structure. In alternative configurations, a wind turbine may comprise a V-shaped support structure on a common base, with a nacelle installed at the outer end of each support arm. Also web-like or honeycomb arrangements have been used for installing multiple nacelles in one construction.

Any wind turbine is prone to vibrations since it comprises a large mass placed at the end of a slender tower or tower structure. These vibrations include nacelle movement in the lateral direction as well as in the fore-aft direction. Excessive vibrations can cause serious damage in the wind turbine and may even form a safety issue when, e.g., the vibration induced overload leads to loose parts or fire hazards. Mechanical and electromechanical accelerometers have been used for monitoring a conventional tower structure and warning for signs of overload. Such monitoring systems may be coupled with a protection system that reacts on the overload warnings by unloading the turbine, e.g. by shutting down power production.

It is further known in the art that the vibrations can be damped by actively pitching of the blades to generate counter forces to reduce the nacelle movement. In this regard, a collective adjustment of the blade pitch, where all rotor blades are adjusted by the same pitch angle, can be used to counteract vibrations in the fore-aft direction. This is accomplished by modifying the thrust force. For lateral vibrations, an individual blade pitch adjustment may be used to counteract a lateral vibration of the tower. The individual blade pitch adjustment provides individual pitch angle settings for each rotor blade to generate a resulting lateral force. For example, in US7692322 a wind turbine with an active damping method is described. In this patent document, fore-aft nacelle vibrations are described to be damped by determining a collective pitch angle adjustment for generating a thrust on the rotor blades so as to cancel out the vibrations of the nacelle. The collective pitch angle adjustment is based on a speed estimation of the nacelle movement, as determined from a detected acceleration signal in the fore-aft direction.

In multi-rotor wind turbines, similar fore-aft nacelle vibrations do occur. However, just applying the known methods of monitoring and preventing tower structure vibrations may not be sufficient for protecting against the structural overload such vibrations may cause in a multi-rotor turbine. The provision of nacelles and rotors at the outer ends of long arms extending from the wind turbine tower results in new vibration modes that are more difficult to control. Consequently, new strategies are needed for protecting multi-rotor wind turbine against vibration induced overload.

There is therefore a need to provide a method of protecting the support structure of a multi-rotor wind turbine against vibration induced overload.

WO 2017/202945 A1, WO 2017/084676 A1, WO 2016/128004 A1 and WO 2016/128002 A1 disclose aspects related to the complex vibrational modes that can occur in a multi-rotor wind turbine.

### SUMMARY OF THE INVENTION

According to the invention this object is achieved by providing a method of protecting a multi-rotor wind turbine support structure against vibration induced overload in accordance with claim 1. The method comprises determining a vibrational mode level of at least one vibrational mode of the wind turbine support structure, and activating a safety mode if at least one of the vibrational mode levels exceeds a respective vibrational mode threshold.

The different vibrational modes in a multirotor wind turbine lead to a mixed motion data signal with information about all modes. Because the different vibrational modes may differ in phase, frequency and amplitude and all sensor signals comprise a certain amount of noise, it is not so easy to determine the vibrational mode levels for all relevant modes. The inventors have realized that by combining motion data relating to different nacelles of the multirotor wind turbine, it is possible to properly isolate the different vibrational modes that can occur from the mixed motion data signal. This information can be used in an attempt to counteract and reduce the different vibrations via suitable adjustment of the rotor blade pitch of one or more of the rotors. However, the complex damping algorithms needed for avoiding damage caused by vibration induced overload may not always be available or sufficiently effective. For these situations, the current invention provides an important safety mechanism. After deriving the vibrational mode level of at least one mode from the mixed motion data signal, the thus derived vibrational motion level is compared to a respective vibrational mode threshold. The thresholds may, and preferably will, be different for the different vibrational modes. For example, the threshold for torsional loading may be lower than the threshold for bending of the support structure. Wind turbine properties (design, materials, size, age, ...), the current operational state of the wind turbine and external factors like the current and expected weather conditions may determine the threshold levels. When the vibrational mode level exceeds the respective vibrational mode threshold, a safety mode is activated.

Activating the safety mode may, e.g., comprise derating or shutting down at least one of the nacelles. When partly or completely pitching out the rotor blades of one or more rotors, the thrust on these rotors is reduced, thereby taking away the cause of the load. For example, the rotors may be derated to 50% of their nominal power output in an attempt to bring the wind turbine back to safer level of vibrations. While and after reducing the rotor output to this exemplary 50%, the vibrational mode levels may continue to be monitored. When the vibrational mode levels are not yet below the respective vibrational mode thresholds, further derating or a full shutdown may be needed. When the vibrational mode levels are well below the respective vibrational mode thresholds, a stepwise increase of the power output may be considered.

A safety shutdown or derating may be needed when only one vibrational mode level is above its respective threshold, but the safety mode may also be initiated when two or more vibrational mode levels approach their respective thresholds and/or exceed a second, lower, threshold. Also, multiple thresholds may exist for the same vibrational mode.

Exceeding a first, lower, threshold may then only lead to derating, while exceeding the second, higher, threshold triggers a complete shutdown of one or more of the rotors.

Different safety measures may be applied for different exceeded vibrational mode thresholds. In the event of excessive fore-aft bending, the first and second nacelle are preferably shut down or derated simultaneously. When a torsion mode level of the wind turbine support structure exceeds its threshold, it may be better to shut down or derate the two rotors one by one. When shutting down or derating a rotor for safety by changing the pitch of the rotor blades, this may be done as quick as possible or at a controlled pitch rate that may, e.g., depend on the motion data and/or the current rotor speed. The timing of the safety measures (both the moment of activation and the pace of the applied change) may also vary depending on, e.g., the motion data, the operational state of the wind turbine or external circumstances.

The multi-rotor wind turbine may comprise at least two rotor arms for carrying the nacelles. Two nacelles arranged in the same level may share a yaw system for rotating the nacelles in the yaw direction, e.g. to keep the turbine upwind. A yaw signal may be provided which represent active yawing of the yaw system. When the yaw system is actively yawing the safety mode relating to the torsion mode may be disabled or the torsion threshold may be increased. In this manner it can be ensured that the safety measures directed to torsional vibration can be set in accordance with the operation of the turbine. For example larger vibrational amplitudes may be acceptable in particular in connection with start and stop of the yawing, but also during yaw movement, larger vibration amplitudes may be tolerated since the yaw movement may have a damping effect on the torsional vibration mode. When the yaw system is no longer yawing, the safety mode relating to the torsion mode may be re-activated or the torsion threshold may be decreased again. The system may be provided with a delay before re-activating the safety measures to ensure that the any transients in the system has settled down again after stopping of the active yaw motion. The delay may be a predefined time delay, e.g. based on estimated damping characteristics of the structure.

The motion data may, e.g., comprise position data, velocity data and/or acceleration data. For example, GPS devices, accelerometers and/or gyroscopes may be used for measuring such motion data. Alternatively, strain gauges in the support structure or at the point of attachment of a rotor arm to the wind turbine support structure may provide data signals that are representative of the monitored vibrations. In addition to motion data sensors along the rotor arms and at the nacelles, the motion data may further represent a movement of the wind turbine support structure itself.

In the present invention, at least two rotor arms are attached to the wind turbine support structure, the first nacelle and the second nacelle being carried by the respective rotor arms at substantially equal distances from the longitudinal axis. The motion data is obtained by at least two motion sensors located along the respective rotor arms. The at least one vibrational mode comprises a torsion mode and/or a fore-aft bending mode of the wind turbine support structure and determining the vibrational mode level includes combining motion signals from the at least two motion sensors in order to decouple a torsion signal from a fore-aft bending signal. The motion sensors may be located at the respective nacelles or elsewhere along the rotor arms. Interestingly, decoupling the torsion mode from the fore-aft bending mode does not require the at least two motion sensors to be located at equal distances from the longitudinal axis, but is already possible with only one motion sensor per rotor arm, even when located at different distances. More than two sensors may be used in combination with some averaging, regression or fitting function for further improving the accuracy of the determining of the vibrational mode level. When the vibrational mode is a torsion mode of the wind turbine support structure, determining the vibrational mode level of the torsion mode includes subtracting a motion signal of the first nacelle from a motion signal of the second nacelle. This specific way of processing the motion data turns out to be very useful for accurately determining torsional vibrations and works particularly well when the motion signal is an acceleration signal. The inventors have realised that in the fore-aft bending motion, both nacelles move in phase. In the torsional vibration motion, both nacelles vibrate with a 180° phase difference. Subtracting the motion signal of the first nacelle from the motion signal of the second nacelle cancels out the fore-aft vibrations and amplifies the torsional vibration. The thus obtained torsion level, which is independent of the fore-aft bending of the support structure, is then compared to the torsion threshold. When the torsion level exceeds the threshold, an appropriate safety mode is activated.

When, in a wind turbine of the same configuration, the at least one vibrational mode is a fore-aft bending mode of the wind turbine support structure, determining the vibrational mode level of the fore-aft bending mode includes summing the motion signals of the first and second nacelle. Because of the phase difference of the two detected torsional vibrations in both nacelles, adding the two signals may completely cancel out these torsional vibrations, thereby isolating the remaining vibrational modes, such as the for-aft bending of the support structure. The thus obtained fore-aft bending level, which is independent of the torsion level, is then compared to the fore-aft bending threshold. When the fore-aft bending level exceeds the threshold, an appropriate safety mode is activated.

According to a second aspect of the invention, a multi-rotor wind turbine is provided in accordance with claim 11. The overload response unit is operably coupled to the first and the second pitch controllers and is configured to perform a method as described above.

Each nacelle may comprise a motion sensor for generating the motion data, and the motion sensors are operatively coupled to the overload control unit for sending the motion data thereto. Motion sensors may also be provided elsewhere along the rotor arms. Additionally, the multi-rotor wind turbine may comprise a support structure motion sensor, provided at the wind turbine support structure for generating motion data representing a movement of the wind turbine support structure. Also the support structure motion sensor is operatively coupled to the overload response unit for sending the motion data thereto.

In a multi-rotor wind turbine with two sets of rotors, provided on arms extending from the wind turbine support structure at two different levels, the top level rotors may be shut down or derated while the lower level rotors remain active. Similarly, when multiple rotors are provided on the same rotor arm, the more distal ones may be shutdown at lower vibrational mode levels. Different threshold levels may apply to rotors at different heights or at different distances from the wind turbine support structure. When a mix of smaller and larger rotors is used, that may also lead to different thresholds for each rotor.

It will be appreciated that preferred and/or optional features of the first aspect of the invention may be combined with the other aspects of the invention. The invention in its various aspects is defined in the independent claims below and advantageous features are defined in the dependent claims below.

### BRIEF DESCRIPTION OF THE DRAWINGS

For a better understanding of the invention, some embodiments of the invention will now be described with reference to the following drawings, in which:
Figure 1 schematically shows a multi-rotor wind turbine in which the method according to the invention may be implemented.
Figure 2 shows a schematic representation of some functional parts of the multi-rotor wind turbine.
Figure 3 shows a high level flow chart of the signal processing occurring in a method according to the invention.

### DETAILED DESCRIPTION

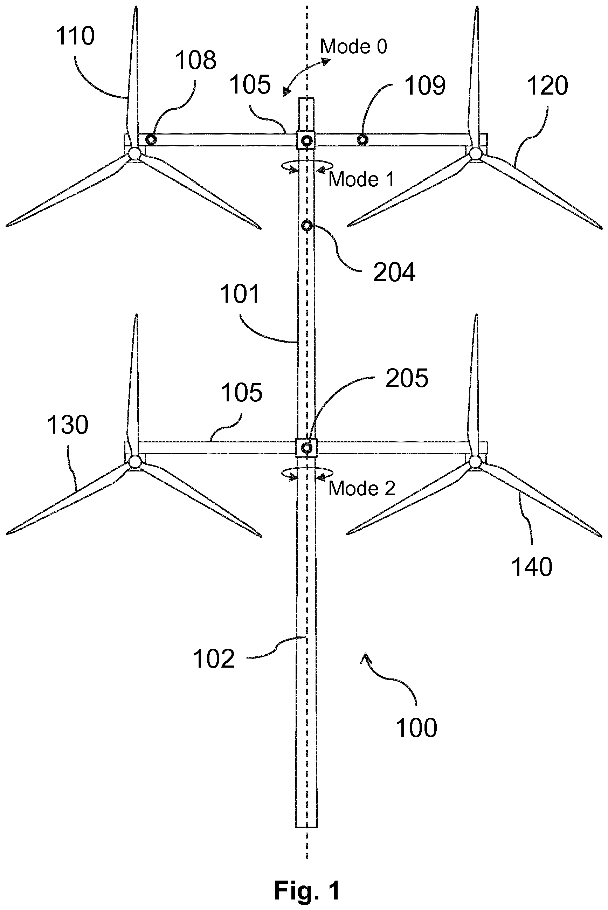

Figure 1 schematically shows a multi-rotor wind turbine 100 in which the method according to the invention may be implemented. The currently most common type of wind turbine is the horizontal axis wind turbine (HAWT). It usually has a nacelle placed on top of a high vertical pole, with the rotor blades attached to a horizontal low speed shaft that extends from the nacelle. The nacelle may comprise a gear box for coupling the low speed shaft to an also horizontal high speed shaft that is connected to the generator. Power generated by the generator is transported to the ground by a power line running through the core of the pole, where it can be used or stored immediately or be coupled to a larger power grid. Where, in the past, wind turbines and their rotor blades have grown bigger and bigger to satisfy the increasing demand for wind powered electricity, recently also another strategy has been introduced; the multi-rotor wind turbine 100. Instead of one nacelle with one rotor on the top of the pole, this multi-rotor wind turbine 100 comprises two or more nacelles, here shown with four nacelles 111, 121, 131, 141, each carrying their own rotor 110, 120, 130, 140. In order to avoid the rotor blades of different rotors 110-140 running into each other, the nacelles 111-141 are spaced from each other by attaching them to arms 105, originating from the pole. In this example, the four rotors are arranged in two layers, and each layer can be yawed independently. While in the current examples all four rotors 110-140 rotate in the same vertical plane, it is also possible to put one or more rotors in different planes. In the following exemplary embodiments, the multi-rotor wind turbine 100 has two or four rotors 110-140. It is, however, to be noted that a multi-rotor wind turbine, may alternatively comprise 3, 5, 6 or more rotors. In alternative configurations, a wind turbine may comprise a V-shaped support structure on a common base, with a nacelle installed at the outer end of each support arm. Also web-like or honeycomb arrangements have been used for installing multiple nacelles in one construction.

Figure 1 further shows three different vibrational modes that may occur in this wind turbine 100. Mode 0 is a fore-aft bending motion of the wind turbine tower 101. This fore-aft bending takes place in a direction parallel to the wind direction, i.e. perpendicular to the planes of rotation of the four rotors 110-140. The fore-aft bending causes all four rotors 110-140 to move backward and forward simultaneously and in phase. The two lower level rotors 130, 140 move back and forth with the same frequency as the lower level rotors, 110, 120, albeit with a smaller amplitude.

Mode 1 is a torsional vibration around the central longitudinal axis of the wind turbine tower 101. The torsional vibration causes the two rotors 110, 120 at the upper level to move in opposite directions. When the first rotor 110 moves forward, the second rotor 120 moves backward, and vice versa. Mode 2 also is a torsional vibration around the central longitudinal axis of the wind turbine 100, but at a lower vertical level. The amplitude, phase and frequency of the mode 2 torsional tower vibrations may, and generally will, differ from the mode 1 torsional tower vibrations. The actual motion pattern of each individual rotor 110-140 is influenced by multiple vibrational modes. When using sensors to detect these motion patterns, a complex mixed vibration signal is measured, making it difficult to analyse and control the vibrational motion.

Different types of sensors may be used for gathering the motion data that is used for determining vibrational mode levels in the wind turbine support structure. Some sensors may only be suitable for detecting some of the vibrational modes. Other sensors provide information that is relevant for more vibrational modes. For example, motion sensors 108, 109 measuring position, velocity and/or acceleration may be installed at known positions on the rotor arms 105 or in or at the nacelles. Such motion sensors 204 may also be installed on the wind turbine tower 101. Motion sensors 204 placed on the wind turbine tower 101 itself may be very useful for detecting fore-aft bending motions, but less for detecting torsional vibrations. Other types of sensors, such as strain gauges 205 may help to determine the torsional vibration levels. Tower torsion may be detected at different positions along the tower 101, but is preferably measured close to the point where the rotor arms 105 are coupled to the tower 101.

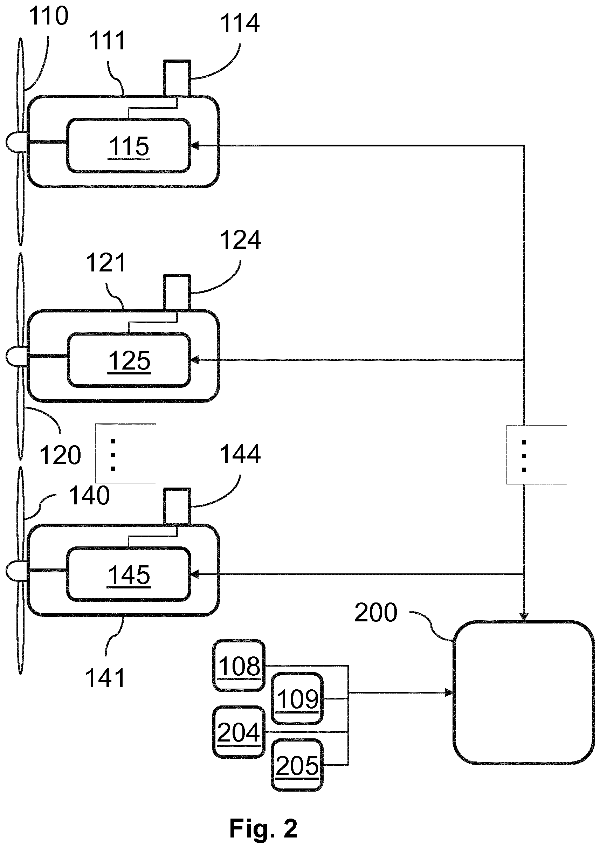

Figure 2 shows a schematic representation of some functional parts of the multi-rotor wind turbine 100. For conciseness only, the third rotor 130 is omitted. In a similar manner, the wind turbine also works with two, three, five or more rotors. Each rotor 110, 120, 140 is electronically coupled to a respective production controller 115, 125, 145. The production controller 115-145 is operable to receive sensor readings from all types of sensors useful for the optimized control of the wind turbine 100. Such sensor readings may represent (and are not limited to) wind speed, speed of rotation, gear box settings, pitch angle, yaw angle and power output. Depending on what they are actually measuring, the sensors may, e.g., be installed on the rotor blades, in the rotor hub, in the gearbox or the generator or on a brake or rotor shaft. Wind speed, for example, may be measured centrally with only one wind sensor or at each rotor separately using one or more wind speed sensors installed on each rotor.

A relevant sensor for the current invention is the motion sensor 114, 124, 144. Each nacelle 111-141 may comprise one or more motion sensors 114-144 for monitoring, e.g., a position, velocity and/or acceleration of the respective nacelle 111-141. Such sensors 114-144 may, e.g., be realised as GPS sensors, accelerometers or gyroscopic devices. In the following, we will regularly refer to these motion sensors 114-144 as accelerometers, but it is to be noted that the invention is not limited to specific types of sensors. The acceleration data obtained by the accelerometers 114-144 is fed to the respective production controllers 115-145 and from there sent to a central overload response unit 200. Alternatively, the acceleration data is sent to the overload response unit 200 directly. The motion data may be measured in one direction only, preferably in a horizontal plane and in a direction perpendicular to the rotor arm 105 to which the respective nacelle 111-141 is attached. Preferably, the acceleration data represents both the amount and the direction of the acceleration of the accelerometer 114-144. Alternatively, or additionally, as already explained above with reference to figure 1, motion sensors 108, 109, 204 or, e.g., strain gauges 205 may be placed at different positions on the rotor arm 105 or the wind turbine tower 101. In principle, any wind turbine part that moves or deforms due to the tower vibrations is a suitable mounting point for a sensor detecting vibrational motions.

The production controller 115-145 processes, and optionally stores, all the incoming information and adjusts control settings like desired pitch angle, yaw angle and speed of rotation in such a way to control and optimize the power output of the rotor 110-140. The production controller 115-145 is not necessarily a single unit harbouring all control functions of the wind turbine 100. Separate control functions may be provided by separate control units For example, a pitch control system may be provided in the rotor hub, close to the pitch control mechanism, and a central controller and a yaw control unit at two separate locations in the nacelle. In this schematic representation, the production controllers 115-145 are situated inside the respective nacelles 111-141 of their rotors, but alternative setups are foreseeable. For example, a central control unit may be provided for controlling the power production of each one of the rotors 110-140, or all data may be communicated wirelessly to a cloud server that processes the incoming data and returns control Instructions via the same or a similar communication signal.

A central overload response unit 200 receives the motion data from the different sensors 108, 109, 114-144, uses the incoming data to determine one or more vibrational mode levels and activates a safety mode when the vibrational mode level exceeds it threshold. The overload response unit 200 may be provided at a central location in the tower 101 or the tower base of the wind turbine 100. Alternatively, the overload response unit 200 is provided in one of the nacelles, centrally in the wind turbine park or at a remote location. The functionality of the overload response unit 200 may be distributed over multiple controllers at different locations and/or be embodied in one or more controllers that are already present for other purposes.

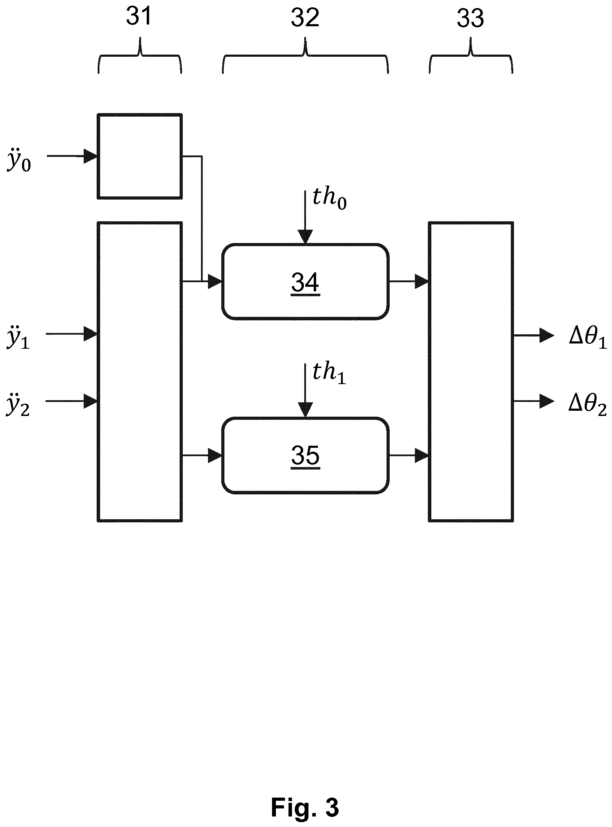

Figure 3 shows a high level flow chart of the signal processing occurring in a method according to the invention. The exemplary method shown here makes use of acceleration data, such as for example supplied by or derived from accelerometers or GPS location data. For this example, we assume a simple two rotor wind turbine with one wind turbine tower and two rotor arms. Each rotor arm carries a nacelle with a rotor. For wind turbines with more rotors or other types of support structures, the here described method is adapted to deal with the relevant vibrational modes occurring in such a wind turbine support structure.

The overall aim of the method according to the invention is to protect the wind turbine 100 against structural damage caused by vibration induced overload. Excessive vibrations may cause structural damage to the support structure. Such damage could, e.g., lead to reduced life-expectancy of the wind turbine, increased off-time for technical maintenance and higher costs for parts replacement. In a worst case scenario the support structure or part thereof may even collapse, which leads to obvious safety risks in the direct environment of the wind turbine 100. In a multirotor wind turbine 100 different vibrational modes, depending on the design of the support structure, influence the tower motion.

Some vibrational modes may be more damaging than others and are therefore more important to detect and to act on before irreversible damage is done. With the method described here, the different vibrational modes are first isolated and then compare to their respective and specific thresholds. When any of the thresholds is exceeded, safety measures are taken. The operational adaptations made in the safety mode may depend on which vibrational mode or modes are considered problematic and/or the extent to which the thresholds are exceeded.

The method of figure 3 comprises three stages 31, 32, 33. In a mode isolation stage 31, the overload response unit receives the acceleration data (*ÿ*₁, *ÿ*₂) from two motion sensors 108, 109, 114, 124 on the rotor arms 105. As described before, the sensors may be installed in or at the nacelles 111, 121 or elsewhere on the rotor arms 105. Typically, the sensors will be installed symmetrically, i.e. at equal distances from wind turbine tower, but this is not necessary for allowing the vibrational mode levels to be determined accurately. Optionally also motion data (*ÿ*₀) from an acceleration sensor in the wind turbine tower itself is used as input. In this first signal processing stage 31, the incoming data may be filtered, amplified or otherwise processed before it is used to extract the respective vibrational mode levels for the different vibrational modes from the sensor signals (*ÿ*₀, *ÿ*₁, *ÿ*₂). In this example, the main vibrational modes to be monitored are the mode 0 fore-aft tower bending and the mode 1 tower torsion. For isolating the mode 0 and mode 1 vibration levels from the incoming motion data, use is made of the fact that the fore-aft bending makes sensors at opposite rotor arms move in phase, while tower torsion adds a counterphase component to the sensor signals.

If the accelerometers on both rotor arms are placed at equal distances from the wind turbine tower, e.g., both at the nacelle or halfway between the nacelle and the tower, the mode 0 vibration level may be isolated by summing the sensor signals (*ÿ*₁, *ÿ*₂) from both sensors. When summing the two signals, the tower torsion components will cancel each other out. Similarly, subtracting one signal from the other will remove the fore-aft tower bending component, thereby isolating the mode 1 component. The signal (*ÿ*₀) from the motion sensor located at the wind turbine tower itself does not have a tower torsion component (assuming that it is installed close to the longitudinal axis of the tower) and can be used for improving the accuracy of the isolated mode 0 vibration level signal.

When the sensors are placed at different distances from the wind turbine tower, their respective distances to the tower has to be taken into account when isolating the different modes. In a reliable approximation wherein it is assumed that the arms are rigis, the sensor signal from an accelerometer at one rotor arm can be expressed as *S*₁ = *B* - *L₁* ∗ *A.* Wherein *B* is the acceleration (*m*/*s*²) due to the mode 0 vibrations. The same acceleration will be experienced at all positions along the rotor arms and also by a tower based accelerometer located at the same height as the rotor arms. *L*₁ depicts the distance (*m*) between the first sensor and the central longitudinal axis of the support structure. *A* is the torsional acceleration (*rad*/*s*²) due to the mode 1 vibrations. This torsional acceleration measured in *rad*/*s*² is the same for both sensors, but its contribution to the sensor signal increases when moving further away from the longitudinal axis. At the other sensor, *A* and B are the same, but the contribution of the torsional acceleration to the sensor signal works in the opposite direction; *S*₂ = *B* + *L₂* ∗ *A.* From these two sensor signals, the actual mode 0 and mode 1 acceleration components can be derived; *A* = (*S*₂ - *S*₁)/(*L*₁ + *L*₂) and *B* = *S*₁ + *L*₁(*S*₂ - *S*₁)/(*L*₁ + *L*₂). Mode 0 and mode 1 vibration levels could in a similar way be derived from position or velocity data. More than two sensors may be used in combination with some averaging, regression or fitting function for further improving the accuracy of the determining of the vibrational mode level.

The thus obtained vibrational mode levels may then undergo some additional processing (normalization, frequency filtering ...) before they are checked against their respective threshold (*th*₀*, th*₁) in the monitoring stage 32. At the monitoring stage, the vibrational mode levels obtained from the mode isolation stage 31 are compared to their respective thresholds (*th*₀*, th*₁). Here we show separate monitoring modules 34, 35 for the different vibrational modes, but in the actual implementation the whole monitoring stage may be embodied by, e.g., a single software module or electronic circuit. The same holds for the data processing in the other two data processing stages 31, 33. All data processing steps of the method according to the invention may be implemented in software and/or hardware and all at the same location or distributed over multiple location or modules.

At the mode 0 monitoring module 34, the mode 0 vibrational mode level is compared to a mode 0 threshold *th*₀*.* The monitoring stage may only use one threshold *th*₀ for checking if the fore-aft bending level is in a safe or unsafe region. Alternatively, multiple thresholds may be used for identifying different risk levels that may each be followed by different safety measures in the following safe mode activation stage 33. Furthermore, the thresholds may depend on internal or external factors, such as the operational state of the wind turbine (are all rotors active, current rotor speeds, ...), weather conditions (temperature, wind, ...) or local circumstances like the presence of service personnel. The thresholds may thus either be static or dynamic. In a similar way a mode 1 monitoring module 35 compares the mode 1 vibrational mode level to one or more thresholds *th*₁.At the output side of this monitoring stage 32, each monitoring module 34, 35 may provide an overload alarm. Preferably the alarm signal does not only indicate that an overload or near-overload situation is detected, but also additional information like what vibrational mode exceeds the threshold and how much the threshold is exceeded.

In the safe mode activation stage 33, a suitable strategy is selected for reacting to the alarm signal(s). The selected strategy is then communicated to the production controllers of the relevant nacelles, where the rotor blade pitch of the corresponding rotors is adapted to put the rotor in the planned safe mode. The safe mode may require derating or a complete shutdown of one or more rotors, which is usually done by pitching the rotor blades out of the wind and may be assisted by active breaking of the power train. Whether derating or a shutdown is the preferred solution will depend on the type of vibrations (mode 0, mode 1 ...), the threshold that is exceeded (a lower or a higher threshold), wind speed, wind turbine type and many other relevant factors. Also the pitch rate, i.e. the speed with which the rotor blade is rotated to the planned safer pitch angle may depend on such additional factors, including also rotational speed and/or acceleration.

Another important aspect of the safe mode strategy is the timing of the rotor pitch adjustment. For example, the start of the adjustment may depend on the current position, speed or acceleration of the nacelle and rotor arm. In addition to the motion data, also the type of threshold that is exceeded may be taken into account. In the event of excessive fore-aft bending, it may be preferred to stop or derate both nacelles simultaneously and at the same rate. When, on the other hand, the torsional vibrations lead to a risk of overload, it could be preferred to derate or shutdown one of the nacelles first and the other one later.

The scope of protection is defined by the appended claims.

## Claims

1. A method of protecting a multi-rotor wind turbine support structure (101) against vibration induced overload, wherein at least two rotor arms (105) are attached to the wind turbine support structure (101), and the wind turbine (100) comprising at least a first nacelle (111) with a first rotor (110) and a second nacelle (121) with a second rotor (120), the first nacelle (111) and the second nacelle (121) being carried by the respective rotor arms (105) at substantially equal distances from a central longitudinal axis (102) of the wind turbine support structure (101), the method comprising the steps of:
receiving motion data (*ÿ*₀, *ÿ*₁, *ÿ*₂) representing a movement of the first nacelle (111) and of the second nacelle (121) the motion data (*ÿ*₁, *ÿ*₂) is obtained by at least two motion sensors (108, 109, 114, 124), located along the respective rotor arms (105),
**characterized in that** the method further comprises:
combining the motion data relating to the first and the second nacelle in order to decouple a torsion signal from a fore-aft bending signal;
determining a vibrational mode level of a torsion mode by subtracting the motion signal (*ÿ*₁) from the motion sensor (114) at the first nacelle (111) from the motion signal (*ÿ*₂) from the motion sensor (124) at the second nacelle (121),
determining a vibrational mode level of a fore-aft bending mode by summing the motion signal (*ÿ*1) from the motion sensor (114) at the first nacelle (111) and the motion signal (*ÿ*₂) from the motion sensor (124) at the second nacelle (121),
and
activating a safety mode if at least one of the vibrational mode levels exceeds a respective vibrational mode threshold.

2. A method of protecting a multi-rotor wind turbine support structure (101) as claimed in claim 1, wherein activating the safety mode comprises derating at least one of the nacelles (111, 121) or shutting down at least one of the nacelles (111, 121).

3. A method of protecting a multi-rotor wind turbine support structure (101) as claimed in any one of the preceding claims, wherein the at least one vibrational mode is a fore-aft bending mode of the wind turbine support structure (101).

4. A method of protecting a multi-rotor wind turbine support structure (101) as claimed in claim 3, wherein it is determined that a fore-aft bending level exceeds a fore-aft bending threshold, and wherein the safety mode comprises derating or shutting down the first nacelle (111) and the second nacelle (112) at substantially the same time.

5. A method of protecting a multi-rotor wind turbine support structure (101) as claimed in any one of the preceding claims, wherein the at least one vibrational mode is a torsion mode of the wind turbine support structure (101).

6. A method of protecting a multi-rotor wind turbine support structure (101) as claimed in claim 5, wherein it is determined that a torsion level exceeds a torsion threshold, and wherein the safety mode comprises derating or shutting down the second nacelle (112) derating or shutting down the first nacelle (111) at different points in time.

7. A method of protecting a multi-rotor wind turbine support structure (101) as claimed in claim 5, where:
at least two rotor arms (105) are attached to the wind turbine support structure (101), the first nacelle (111) and the second nacelle (121) being carried by the respective rotor arms (105) at substantially equal distances from the longitudinal axis (102),
a yaw system arranged to yaw the at least two rotor arms,
wherein the method further comprising, receiving a yaw signal representing active yawing of the yaw system,
upon detection that the yaw system is actively yawing, disable the safety mode relating to the torsion mode or increase the torsion threshold.

8. A method of protecting a multi-rotor wind turbine support structure (101) as claimed in any one of the preceding claims, wherein a timing of the activation of the safety mode is controlled in dependence of the motion data (*ÿ*₀, *ÿ*₁, *ÿ*₂).

9. A method of protecting a multi-rotor wind turbine support structure (101) as claimed in any one of the preceding claims, further comprising determining the respective vibrational mode threshold based on an operational state of the wind turbine (100) and/or on at least one external parameter.

10. A method of protecting a multi-rotor wind turbine support structure (102) as claimed in any one of the preceding claims, wherein activating the safety mode includes changing a pitch of at least one of the first and the second rotors (110, 120) and wherein a pitch rate for the changing of the pitch is controlled in dependence of the motion data (*ÿ*₀, *ÿ*₁, *ÿ*₂) and/or a rotor speed of the respective rotor (110, 120).

11. A multi-rotor wind turbine (100) comprising:
a wind turbine support structure (101), at least two rotor arms (105) attached to the wind turbine support structure (101)
a first nacelle (111) with a first rotor (110) and a first pitch controller (115), operatively coupled to the first rotor (110) for controlling the pitch thereof,
a second nacelle (121) with a second rotor (120) and a second pitch controller (125), operatively coupled to the second rotor (120) for controlling the pitch thereof,
the first nacelle (111) and the second nacelle (121) being carried by the respective rotor arms (105) at substantially equal distances from a central longitudinal axis of the wind turbine support structure (101),
at least two motion sensors (108, 109, 114, 124) located along the respective rotor arms (105) for obtaining motion data (*ÿ*₀, *ÿ*₁, *ÿ*₂) representing a movement of the first nacelle (111) and of the second nacelle (121), and
an overload response unit (200), operably coupled to the at least two motion sensors (108, 109, 114, 124) and to the first and the second pitch controllers (115, 125) and being configured to perform a method as claimed in any one of the preceding claims.

12. A multi-rotor wind turbine (100) as claimed in claim 11, further comprising a support structure motion sensor (204), provided at the wind turbine support structure (101) for generating motion data (*ÿ*₀) representing a movement of the wind turbine support structure (101), and wherein the support structure motion sensor (204) is operatively coupled to the overload response unit (200) for sending the motion data (*ÿ*₀) thereto.

## Patentansprüche

1. Verfahren zum Schützen einer Multirotor-Windkraftanlagenträgerstruktur (101) gegen schwingungsinduzierte Überlast, wobei mindestens zwei Rotorarme (105) an der Windkraftanlagenträgerstruktur (101) angebracht sind und die Windkraftanlage (100) mindestens eine erste Gondel (111) mit einem ersten Rotor (110) und eine zweite Gondel (121) mit einem zweiten Rotor (120) umfasst, wobei die erste Gondel (111) und die zweite Gondel (121) von den jeweiligen Rotorarmen (105) in im Wesentlichen gleichen Abständen von einer zentralen Längsachse (102) der Windkraftanlagenträgerstruktur (101) getragen werden, wobei das Verfahren die folgenden Schritte umfasst:
Empfangen von Bewegungsdaten (*ÿ*₀, *ÿ*₁ *ÿ*₂) die eine Bewegung der ersten Gondel (111) und der zweiten Gondel (121) darstellen, wobei die Bewegungsdaten (*ÿ*₁, *ÿ*₂) durch mindestens zwei Bewegungssensoren (108, 109, 114, 124) erhalten werden, die entlang der jeweiligen Rotorarme (105) angeordnet sind,
**dadurch gekennzeichnet, dass** das Verfahren weiter Folgendes umfasst:
Kombinieren der Bewegungsdaten, die sich auf die erste und die zweite Gondel beziehen, um ein Torsionssignal von einem Vorwärts-Rückwärts-Biegungssignal zu entkoppeln;
Bestimmen eines Schwingungsmoduspegels eines Torsionsmodus durch Subtrahieren des Bewegungssignals (ÿ₁) von dem Bewegungssensor (114) an der ersten Gondel (111) von dem Bewegungssignal (ÿ₂) von dem Bewegungssensor (124) an der zweiten Gondel (121),
Bestimmen eines Schwingungsmoduspegels eines Vorwärts-Rückwärts-Biegungsmodus durch Summieren des Bewegungssignals (ÿ₁) von dem Bewegungssensor (114) an der ersten Gondel (111) und des Bewegungssignals (ÿ₂) von dem Bewegungssensor (124) an der zweiten Gondel (121),
und
Aktivieren eines Sicherheitsmodus, wenn mindestens einer der Schwingungsmoduspegel eine jeweilige Schwingungsmodusschwelle überschreitet.

2. Verfahren zum Schützen einer Multirotor-Windkraftanlagenträgerstruktur (101) nach Anspruch 1, wobei das Aktivieren des Sicherheitsmodus das Drosseln mindestens einer der Gondeln (111, 121) oder das Abschalten mindestens einer der Gondeln (111, 121) umfasst.

3. Verfahren zum Schützen einer Multirotor-Windkraftanlageträgerstruktur (101) nach einem der vorstehenden Ansprüche, wobei der mindestens eine Schwingungsmodus ein Vorwärts-Rückwärts-Biegungsmodus der Windkraftanlageträgerstruktur (101) ist.

4. Verfahren zum Schützen einer Multirotor-Windkraftanlagenträgerstruktur (101) nach Anspruch 3, wobei bestimmt wird, dass ein Vorwärts-Rückwärts-Biegungspegel eine Vorwärts-Rückwärts-Biegungsschwelle überschreitet, und wobei der Sicherheitsmodus das Drosseln oder Abschalten der ersten Gondel (111) und der zweiten Gondel (112) im Wesentlichen zur gleichen Zeit umfasst.

5. Verfahren zum Schützen einer Multirotor-Windkraftanlageträgerstruktur (101) nach einem der vorstehenden Ansprüche, wobei der mindestens eine Schwingungsmodus ein Torsionsmodus der Windkraftanlageträgerstruktur (101) ist.

6. Verfahren zum Schützen einer Multirotor-Windkraftanlagenträgerstruktur (101) nach Anspruch 5, wobei bestimmt wird, dass ein Torsionspegel eine Torsionsschwelle überschreitet, und wobei der Sicherheitsmodus das Drosseln oder Abschalten der zweiten Gondel (112) und das Drosseln oder Abschalten der ersten Gondel (111) zu unterschiedlichen Zeitpunkten umfasst.

7. Verfahren zum Schützen einer Multirotor-Windkraftanlagenträgerstruktur (101) nach Anspruch 5, wobei:
mindestens zwei Rotorarme (105) an der Windkraftanlagenträgerstruktur (101) angebracht sind, wobei die erste Gondel (111) und die zweite Gondel (121) von den jeweiligen Rotorarmen (105) in im Wesentlichen gleichen Abständen von der Längsachse (102) getragen werden,
ein Giersystem zum Nachführen der mindestens zwei Rotorarme eingerichtet ist,
wobei das Verfahren weiter das Empfangen eines Giersignals umfasst, das ein aktives Nachführen des Giersystems darstellt,
bei Erkennung, dass das Giersystem aktiv nachführt, den Sicherheitsmodus in Bezug auf den Torsionsmodus deaktiviert oder die Torsionsschwelle erhöht.

8. Verfahren zum Schützen einer Multirotor-Windkraftanlagenträgerstruktur (101) nach einem der vorstehenden Ansprüche, wobei ein Zeitpunkt der Aktivierung des Sicherheitsmodus in Abhängigkeit von den Bewegungsdaten (ÿ₀, ÿ₁, ÿ₂) gesteuert wird.

9. Verfahren zum Schützen einer Multirotor-Windkraftanlagenträgerstruktur (101) nach einem der vorstehenden Ansprüche, weiter umfassend das Bestimmen der jeweiligen Schwingungsmodusschwelle basierend auf einem Betriebszustand der Windkraftanlage (100) und/oder auf mindestens einem externen Parameter.

10. Verfahren zum Schützen einer Multirotor-Windkraftanlagenträgerstruktur (102) nach einem der vorstehenden Ansprüche, wobei das Aktivieren des Sicherheitsmodus das Ändern eines Blattwinkels von mindestens einem des ersten und des zweiten Rotors (110, 120) einschließt, und wobei eine Blattwinkelrate für die Änderung des Blattwinkels in Abhängigkeit von den Bewegungsdaten (ÿ₀, ÿ₁ ÿ₂) und/oder einer Rotorgeschwindigkeit des jeweiligen Rotors (110, 120) gesteuert wird.

11. Multirotor-Windkraftanlage (100), umfassend:
eine Windkraftanlagenträgerstruktur (101), wobei mindestens zwei Rotorarme (105) an der Windkraftanlagenträgerstruktur (101) angebracht sind
eine erste Gondel (111) mit einem ersten Rotor (110) und einer ersten Blattwinkelsteuervorrichtung (115), die mit dem ersten Rotor (110) wirkgekoppelt ist, um dessen Blattwinkel zu steuern,
eine zweite Gondel (121) mit einem zweiten Rotor (120) und einer zweiten Blattwinkelsteuervorrichtung (125), die mit dem zweiten Rotor (120) wirkgekoppelt ist, um dessen Blattwinkel zu steuern,
wobei die erste Gondel (111) und die zweite Gondel (121) von den jeweiligen Rotorarmen (105) in im Wesentlichen gleichen Abständen von einer zentralen Längsachse der Windkraftanlagenträgerstruktur (101) getragen werden,
mindestens zwei Bewegungssensoren (108, 109, 114, 124), die entlang der jeweiligen Rotorarme (105) angeordnet sind, um Bewegungsdaten (ÿ₀, ÿ₁ ÿ₂) zu erhalten, die eine Bewegung der ersten Gondel (111) und der zweiten Gondel (121) darstellen, und
eine Überlastreaktionseinheit (200), die mit den mindestens zwei Bewegungssensoren (108, 109, 114, 124) und mit der ersten und der zweiten Blattwinkelsteuervorrichtung (115, 125) wirkgekoppelt und so konfiguriert ist, dass sie ein Verfahren nach einem der vorstehenden Ansprüche durchführt.

12. Multirotor-Windkraftanlage (100) nach Anspruch 11, weiter umfassend einen Trägerstruktur-Bewegungssensor (204), der an der Windkraftanlagenträgerstruktur (101) bereitgestellt ist, um Bewegungsdaten (ÿ₀) zu erzeugen, die eine Bewegung der Windkraftanlagenträgerstruktur (101) darstellen, und wobei der Trägerstruktur-Bewegungssensor (204) mit der Überlastreaktionseinheit (200) wirkgekoppelt ist, um die Bewegungsdaten (ÿ₀) an diese zu senden.

## Revendications

1. Procédé de protection d'une structure de support d'éolienne à rotors multiples (101) contre une surcharge induite par des vibrations, dans lequel au moins deux bras de rotor (105) sont attachés à la structure de support d'éolienne (101), et l'éolienne (100) comprenant au moins une première nacelle (111) avec un premier rotor (110) et une seconde nacelle (121) avec un second rotor (120), la première nacelle (111) et la seconde nacelle (121) étant portées par les bras de rotor (105) respectifs à des distances sensiblement égales d'un axe longitudinal central (102) de la structure de support d'éolienne (101), le procédé comprenant les étapes consistant à :
recevoir des données de mouvement (ÿ₀, ÿ₁, ÿ₂) représentant un déplacement de la première nacelle (111) et de la seconde nacelle (121), les données de mouvement (ÿ₁, ÿ₂) sont obtenues par au moins deux capteurs de mouvement (108, 109, 114, 124), situés le long des bras de rotor (105) respectifs,
**caractérisé en ce que** le procédé comprend en outre :
une combinaison des données de mouvement se rapportant à la première et à la seconde nacelle afin de découpler un signal de torsion d'un signal de courbure avant-arrière ;
une détermination d'un niveau de mode vibrationnel d'un mode de torsion en soustrayant le signal de mouvement (ÿ₁) provenant du capteur de mouvement (114) au niveau de la première nacelle (111) du signal de mouvement (ÿ₂) provenant du capteur de mouvement (124) au niveau de la seconde nacelle (121),
une détermination d'un niveau de mode vibrationnel d'un mode de courbure avant-arrière en additionnant le signal de mouvement (ÿ₁) provenant du capteur de mouvement (114) au niveau de la première nacelle (111) et le signal de mouvement (ÿ₂) provenant du capteur de mouvement (124) au niveau de la seconde nacelle (121),
et
un déclenchement d'un mode de sécurité si au moins un des niveaux de mode vibrationnel dépasse un seuil de mode vibrationnel respectif.

2. Procédé de protection d'une structure de support d'éolienne à rotors multiples (101) selon la revendication 1, dans lequel un déclenchement du mode de sécurité comprend une réduction de valeur nominale d'au moins une des nacelles (111, 121) ou un arrêt d'au moins une des nacelles (111, 121).

3. Procédé de protection d'une structure de support d'éolienne à rotors multiples (101) selon l'une quelconque des revendications précédentes, dans lequel le au moins un mode vibrationnel est un mode de courbure avant-arrière de la structure de support d'éolienne (101).

4. Procédé de protection d'une structure de support d'éolienne à rotors multiples (101) selon la revendication 3, dans lequel il est déterminé qu'un niveau de courbure avant-arrière dépasse un seuil de courbure avant-arrière, et dans lequel le mode de sécurité comprend une réduction de valeur nominale ou un arrêt de la première nacelle (111) et de la seconde nacelle (112) pratiquement en même temps.

5. Procédé de protection d'une structure de support d'éolienne à rotors multiples (101) selon l'une quelconque des revendications précédentes, dans lequel le au moins un mode vibrationnel est un mode de torsion de la structure de support d'éolienne (101).

6. Procédé de protection d'une structure de support d'éolienne à rotors multiples (101) selon la revendication 5, dans lequel il est déterminé qu'un niveau de torsion dépasse un seuil de torsion, et dans lequel le mode de sécurité comprend une réduction de valeur nominale ou un arrêt de la seconde nacelle (112) et une réduction de valeur nominale ou un arrêt de la première nacelle (111) à des points différents dans le temps.

7. Procédé de protection d'une structure de support d'éolienne à rotors multiples (101) selon la revendication 5, où :
au moins deux bras de rotor (105) sont attachés à la structure de support d'éolienne (101), la première nacelle (111) et la seconde nacelle (121) étant portées par les bras de rotor (105) respectifs à des distances sensiblement égales de l'axe longitudinal (102),
un système de lacet est agencé pour orienter les au moins deux bras de rotor,
dans lequel le procédé comprend en outre une réception d'un signal de lacet représentant une orientation active du système de lacet,
lorsqu'il est détecté que le système de lacet réalise une orientation active, une désactivation du mode de sécurité se rapportant au mode de torsion ou une augmentation du seuil de torsion.

8. Procédé de protection d'une structure de support d'éolienne à rotors multiples (101) selon l'une quelconque des revendications précédentes, dans lequel un moment du déclenchement du mode de sécurité est commandé en fonction des données de mouvement (ÿ₀, ÿ₁, ÿ₂).

9. Procédé de protection d'une structure de support d'éolienne à rotors multiples (101) selon l'une quelconque des revendications précédentes, comprenant en outre une détermination du seuil de mode vibrationnel respectif sur la base d'un état opérationnel de l'éolienne (100) et/ou d'au moins un paramètre externe.

10. Procédé de protection d'une structure de support d'éolienne à rotors multiples (102) selon l'une quelconque des revendications précédentes, dans lequel un déclenchement du mode de sécurité inclut un changement d'un calage d'au moins un des premier et second rotors (110, 120) et dans lequel un taux de calage pour le changement du calage est commandé en fonction des données de mouvement (ÿ₀, ÿ₁, ÿ₂) et/ou d'une vitesse de rotor du rotor (110, 120) respectif.

11. Eolienne à rotors multiples (100) comprenant :
une structure de support d'éolienne (101), au moins deux bras de rotor (105) attachés à la structure de support d'éolienne (101)
une première nacelle (111) avec un premier rotor (110) et un premier dispositif de commande de calage (115), accouplé de manière fonctionnelle au premier rotor (110) pour commander le calage de celui-ci,
une seconde nacelle (121) avec un second rotor (120) et un second dispositif de commande de calage (125), accouplé de manière fonctionnelle au second rotor (120) pour commander le calage de celui-ci,
la première nacelle (111) et la seconde nacelle (121) étant portées par les bras de rotor (105) respectifs à des distances sensiblement égales d'un axe longitudinal central de la structure de support d'éolienne (101),
au moins deux capteurs de mouvement (108, 109, 114, 124) situés le long des bras de rotor (105) respectifs pour obtenir des données de mouvement (ÿ₀, ÿ₁, ÿ₂) représentant un déplacement de la première nacelle (111) et de la seconde nacelle (121), et
une unité de réponse de surcharge (200), couplée fonctionnellement aux au moins deux capteurs de mouvement (108, 109, 114, 124) et aux premier et second dispositifs de commande de calage (115, 125) et configurée pour mettre en oeuvre un procédé selon l'une quelconque des revendications précédentes.

12. Eolienne à rotors multiples (100) selon la revendication 11, comprenant en outre un capteur de mouvement de structure de support (204), prévu au niveau de la structure de support d'éolienne (101) pour générer des données de mouvement (ÿ₀) représentant un déplacement de la structure de support d'éolienne (101), et dans laquelle le capteur de mouvement de structure de support (204) est couplé de manière fonctionnelle à l'unité de réponse de surcharge (200) pour envoyer les données de mouvement (ÿ₀) à celle-ci.
